# EUROPÄISCHE PATENTANMELDUNG

(11) **EP 0 959 020 A1**
(43) Veröffentlichungstag der Anmeldung: **24.11.1999**
(21) Anmeldenummer: 98810471.7
(22) Anmeldetag: 20.05.1998
(51) Int. Cl.: B65D 75/34, B32B 7/06

(54) **Manipulationssichere Verpackung**

(71) Anmelder: Alusuisse Technology & Management AG, 8212 Neuhausen am Rheinfall (CH)
(72) Erfinder: Gerber, Manfred, 78224 Singen (DE)

(57) **Zusammenfassung**

Manipulationssichere Verpackung, insbesondere Durchdrück- oder Blisterverpackung, aus einem Bodenteil, enthaltend Vertiefungen zur Aufnahme der zu verpackenden Inhaltsstoffe und einer manipulationssicheren durchdrückbaren Abdeckfolie.

Die Abdeckfolie weist nacheinander folgende Schichten auf:
a) eine metallfolienfreie durchdrückbare Kunststoffschicht in einer Dicke von 20 bis 300
b) ein abschälbarer Kaschierkleber
c) eine nicht durchdrückbare Deckschicht.
Die metallfolienfreie durchdrückbare Kunststoffschicht enthält einen thermoplastischen Kunststoff und 5 bis 60 Gew.-%, bezogen auf den thermoplastischen Kunststoff, Füllstoffe. Dadurch wird die Kunststoffschicht spröde und durchdrückbar. Die nicht durchdrückbare Deckschicht ist elastisch oder reissfest.

Zum Freilegen der Inhaltsstoffe muss in einem ersten Schritt die Deckschicht über den Kaschierkleber abgeschält werden und erst danach können in einem zweiten Schritt die Inhaltsstoffe durch die metallfolienfreie durchdrückbare Kunststoffschicht durchgedrückt werden.

## Beschreibung

Vorliegende Erfindung betrifft eine manipulationssichere Verpackung, insbesondere Durchdrückverpackung, aus einem Bodenteil enthaltend Vertiefungen zur Aufnahme der zu verpackenden Inhaltsstoffe und einer manipulationssicheren durchdrückbaren Abdeckfolie.

Es ist bekannt Bodenteile oder auch Warenträger genannt, von Durchdrückpackungen, in denen eine Mehrzahl von Inhaltsstoffen getrennt voneinander gelagert sind, mit Abdeckfolien aus Metall, wie Aluminiumfolien, zu verschliessen. Die Aluminiumfolien können mit einer Siegelschicht, wie einem Siegellack, beschichtet sein. Die Aluminiumfolie wird über die Siegelschicht auf dem Bodenteil aufgesiegelt. Zur Entnahme der Inhaltsstoffe werden dieselben durch Verformen der Vertiefung gegen die Abdeckfolie gedrückt, wobei die Abdeckfolie einreisst und den Inhaltsstoff freigibt Dies bedeutet, dass die Abdeckfolie inelastisch und leicht einreissbar sein muss. Beispielsweise mit einer Siegelschicht veredelte Aluminiumfolien eignen sich für diesen Zweck hervorragend. Da die Bodenteile oft aus Polymerisaten gefertigt werden, ergeben die leeren Packungen einen ungünstigen Materialmix aus Polymerisaten und Metallen. Es ist daher das Bestreben, sortenreine Verpackungen anzubieten. Deshalb wurden verschiedene Abdeckfolien beschrieben, die auf Polymerisaten aufbauen, also metallfrei, aber dennoch derart spröde sind, dass beim Durchstossen der Inhaltsstoffe sich die Abdeckfolie kaum oder nicht dehnt und leicht bricht. Bekannt sind diese Abdeckfolien beispielsweise aus der EP-A-0 626 322, der DE-A-42 36 450, der EP-A-0 613 832 oder der EP-A-0 757 703. In den beschriebenen Verpackungen werden vorwiegend Medikamente als Pillen, Tabletten, Dragees, Ampullen und dergl. verpackt. Die Medikamente in ihren meist bunten und süssigkeitsähnlichen Darreichungsformen erwecken die Neugierde von Kindern. Um den Zugriff auf spezielle Medikamente zu verhindern, ist es sehr oft zweckmässig, die Öffnungshandgriffe zu erschweren. Den genannten Abdeckfolien haftet der Nachteil an, dass durch den beabsichtigten Zweck der leichten Durchstossbarkeit, eine Entnahme der Inhaltsstoffe aus der Verpackung auch für Kinder kein unüberwindliches Hindernis darstellt

Aufgabe vorliegender Erfindung ist die Schaffung einer metallfolienfreien Verpackung und insbesondere Durchdrückpackung, die -- beispielsweise für Kinderhände -- manipulationssicher ist.

Erfindungsgemäss wird diese Aufgabe dadurch gelöst, dass die Abdeckfolie nacheinander die Schichten aufweist:
a) eine metallfolienfreie durchdrückbare Kunststoffschicht in einer Dicke von 20 bis 300 µm,
b) ein abschälbarer Kaschierkleber
c) eine nicht durchdrückbare Deckschicht,
   und zum Freilegen der Inhaltsstoffe erst die Deckschicht über den Kaschierkleber abgeschält und dann die Inhaltsstoffe durch die Kunststoffschicht durchgedrückt werden.

An einer Durchdrückpackung weist die metallfolienfreie durchdrückbare Kunststoffschicht der Abdeckfolie gegen den Bodenteil und die nicht durchdrückbare Deckschicht der Abdeckfolie gegen die Aussenseite.

Die metallfolienfreie durchdrückbare Kunststoffschicht kann aus zwei oder mehreren thermoplastischen Kunststoffen sein, die in der Folie zwei Phasen bilden. Dies kann beispielsweise eine Mischung aus Polyolefinen, wie Polyethylenen oder Polypropylenen, mit Polymethylmetacrylat, Polyacrylnitril, Acrylnitril-Butadien-Styrol-Blockcopolymerisaten, Styrol-Acrylnitril-Blockcopolymerisaten oder Polyvinylchlorid darstellen.

Die metallfolienfreie durchdrückbare Kunststoffschicht kann beispielsweise auch eine Folie darstellen, enthaltend einen thermoplastischen Kunststoff, vorzugsweise der Reihe der Polyolefine, wie Polyethylene oder Polypropylene, der Polyester, wie Polyalkylenterephthalate und dabei des Polyethylenterephthalates, des Polypropylenterephthalates etc. oder Polyalkylenisophtalate, des Polyvinylchlorids, der Polycarbonate, der Polyamide, des Polystyrols oder der Misch- oder Pfropfpolymerisate des Polystyrols und enthaltend einen Füllstoff. Der Füllstoffanteil kann beispielsweise 5 bis 60 Gew.-%, bezogen auf den thermoplastischen Kunststoff, betragen. Die Füllstoffe können organischer oder anorganischer Natur sein. Organische Füllstoffe sind beispielsweise halogenierte Kohlenwasserstoffe oder Duroplaste. Anorganische Füllstoffe sind z.B. Gläser, Quarz, Calciumcarbonat, Magnesiumcarbonat, Dolomit, Kreide, Silicate, Kieselerde, Bariumsulfat, Russ, Schiefermehl, Schwerspat, Tonerdehydrat, Kaolin, Dietomit, Glimmer, Talk usw. und auch Gemische davon. Der mittlere Durchmesser der Füllstoffpartikel liegt zweckmässig bei 1 bis 15 µm.

Die minimale Dicke der metallfolienfreien durchdrückbaren Kunststoffschicht liegt vorteilhaft bei 25 µm und insbesondere bei 40 µm. Die maximale Dicke der metallfolienfreien durchdrückbaren Kunststoffschicht liegt vorteilhaft bei 60µm und insbesondere bei 120 µm.

Die metallfolienfreie durchdrückbare Kunststoffschicht kann auf der Seite, die an der fertigen Verpackung gegen den Bodenteil zu liegen kommt, direkt gesiegelt werden oder mit einer Siegelschicht, wie einem Siegellack, beispielsweise auf Basis von Polyolefinen, beschichtet sein.

Der abschälbare Kaschierkleber kann beispielsweise auf Basis von Kautschuken, von Polyurethanklebstoffen, von Polyacrylaten, von Styrol-Butadienen oder von Polychloropren sein. Wesentliches Merkmal des abschälbaren -- auch peelbar genannt -- Kaschierklebers ist die Fähigkeit des Kaschierklebers, die durchdrückbare Kunststoffschicht und die nicht durchdrückbare Deckschicht, durch Abschälen (peelen) lösbar, gegenseitig verbunden zu halten. Es kann sich dabei z.B. um Haftkleber handeln. Insbesondere soll der Kaschierkleber es ermöglichen, dass die Deckschicht nicht ungewollt durch mechanische, physikalische oder chemische Einflüsse sich von der durchdrückbaren Kunststoffschicht abschält. Die Deckschicht soll jedoch durch Handgriffe gezielt abgeschält werden können, ohne dass die darunterliegende durchdrückbare Kunststoffschicht eine Beschädigung erfährt. Das Abschälen soll insbesondere durch einen Bruch in der Kaschierkleberschicht an sich erfolgen. Vorteilhaft löst sich die Kaschierkleberschicht beim Abschälen der Deckschicht von der durchdrückbaren Kunststoffschicht und haftet der abgeschälten Deckschicht an. Fallweise kann durch Behandlung der Seite der durchdrückbaren Kunststoffschicht, die der Deckschicht zugewandt ist, mit Haftverminderern, wie z.B. Siliconen, die Haftung des Kaschierklebers gesteuert werden.

Der Kaschierkleber kann in Mengen von beispielsweise 3 bis 100 g/m², vorzugsweise in Mengen von 3 bis 10 eingesetzt werden.

Die nicht durchdrückbare Deckschicht kann beispielsweise eine Monofolie oder ein Folienverbund, enthaltend thermoplastische Kunststoffe, Papiere oder ein Schichtstoff aus thermoplatischen Kunststoffen und Papier sein. Die Deckschicht stellt eine Sicherheitsfolie dar, um den Zugriff zu den Inhaltsstoffen der vorliegenden Verpackung an eine Abfolge von Handgriffen zu binden. Die Deckschicht widersteht den üblichen Durchdrückkräften, die zur Entnahme der Inhaltsstoffe aus einer Durchdrückpackung angewendet werden. Der Widerstand der Deckschicht kann sich aus deren Reissfestigkeit und/oder deren hohen Elastizität ergeben.

Für die Deckschicht sind Monofolien oder Verbunde mit zwei oder mehr Schichten aus thermoplastischen Kunststoffen geeignet, beispielsweise der Reihen der Polyamide, Polyolefine, Polyester, Polycarbonate, Polyvinylchlorid, Polyvinylidenchlorid, Polystyrol, Polyacryinitril, Copolymerisate aus Acrylnitril und Styrol, Copolymerisate aus Acrylnitril, Butadien und Styrol usw. Bevorzugt sind Polyester, wie Polyethylenterephthalate und dabei insbesondere PETP oder Polyamide. Die Papiere können mit Kunststoffschichten Verbunde bilden. Vorteilhaft sind die Folien mono- oder biaxial verstreckt.

Die Papiere für die Deckschicht können beispielsweise Zellstoffpapiere und daraus hergestellte Druckpapiere, wie Zeitungsdruckpapiere, Illustrationsdruckpapiere, Schreib- und Zeichenpapiere, Etikettenpapiere und Büropapiere sein. Bevorzugt werden Druckpapiere mit einem Flächengewicht von 18 bis 250 g/m². Die Papiere sind in der Regel ungestrichene Papiere. Die Papiere können weiss oder auch gefärbt sein, die Färbung kann beispielsweise durch Massefärbung, durch Oberflächenfärbung in der Leimpresse, Tauchfärbung oder Oberflächenfärbung durch Streichen erzielt werden. Die Färbung kann eine helle oder bunte Färbung sein. Insbesondere können Papiere bedruckt sein. Auch die Verwendung von rezykliertem Papier ist möglich. Neben den genannten Papieren können auch Papiere aus Synthesefasern verwendet werden. Es können auch sogenannte Sicherheitspapiere, enthaltend Sicherheitschemikalien oder -fäden oder -fasern verwendet werden.

Gegebenenfalls können die Papiere beschichtet und/oder kaschiert sein. Dazu bieten sich beispielsweise als Beschichtungsverfahren die Extruderbeschichtung, die Dispersionsbeschichtung, und Lackierverfahren an. Die Beschichtung kann eine Lack-, eine Wachs-, eine Paraffin- oder eine Hotmelt- Beschichtung sein. Es können auch Kaschierverfahren angewendet werden, um eine Papierbahn mit beispielsweise einer vorgefertigten Kunststofffolie zu vereinigen.

Es kann auch vorteilhaft sein, dass die Deckschicht eine Sperrschicht, insbesondere gegen den Durchtritt von Gasen und Dämpfen, wie Luft, Sauerstoff, Wasserdampf, aber auch Aromen, Wirkstoffen usw. und auch Licht, enthält. Gegen den Durchtritt von Licht kann eine oder mehrere Schichten der Deckschicht beispielsweise opak, durchgefärbt oder deckend bedruckt sein. Als Sperrschicht für Gase, Dämpfe, Feuchtigkeit, Geruch- und Geschmackstoffe können Folien mit Sperreigenschaften aus thermoplastischen Kunststoffen angewendet werden. Beispiele sind Folien aus Ethylenvinylalkohol-Copolymeren (EVOH), Polyvinylidenchlorid, Polyacrylnitril, z.B. BAREX, Polyacryl-Polyamid-Copolymeren, Copolyester, z.B. Mitsui B-010, aromatische und amorphe Polyamiden, z.B. N-MXD6 der Mitsubishi Gas Chemical. Diese Folien können z.B. 6 µm bis 100 µm dick sein.

Sperrschichten können auch durch die Abscheidung von keramischen Materialien aus der Dampf- oder Gasphase im Vakuum erzeugt werden (chemical vapour deposition oder physical vapour deposition). Die keramischen Materialien sind beispielsweise Oxide, Nitride oder Carbide des Siliciums, Aluminiums, Magnesiums, Chroms, Lantahns, Titans, Bors, Zirkons oder Gemische davon. Solche Schichten können auf einer Kunststoffschicht, resp. -folie oder auf einem Papier als Träger, beispielsweise in einer Dicke von 5 bis 500 nm (Nanometer) abgeschieden werden. Bevorzugt sind Folien thermoplastischer Kunststoffe, wie Polyolefinfolien in einer Dicke von 23 bis 100 µm oder Polyesterfolien in einer Dicke von 12 bis 80 µ m, die mit wenigstens einer 5 bis 500 nm dicken Schicht aus SiOₓ, wobei x eine Zahl von 1,1 bis 2 ist, oder von Al_{y}O_{z}, wobei y/z eine Zahl von 0,2 bis 1,5 ist, beschichtet sind.

Insbesondere die Deckschicht kann mit beliebigen Druckmustern versehen sein. Einzelne oder alle Kunststofffolien können gefärbt, bedruckt konterbedruckt und/oder geprägt sein. Die aussenliegende Deckschicht ist besonders geeignet für das Anbringen von Sicherheits- und Originalitätsmerkmalen, wie Druckmustern, Hologrammen usw.

Die Bodenteile können aus den gleichen Kategorien von thermoplastischen Kunststoffen gefertigt werden, wie beispielsweise oben für die durchdrückbare Kunststoffschicht genannt, durch Kalt- oder Warmumformen, insbesondere Streck- und/oder Tiefziehen von Monofolien oder Verbundfolien. Die Bodenteile weisen eine Mehrzahl von Vertiefungen oder Näpfchen zur vereinzelten Aufnahme der Inhaltsstoffe auf.Bevorzugt sind Bodenteile aus warmumgeformtem Polyvinylchlorid, oder Polypropylen. Der Bodenteil weist eine Mehrzahl von Vertiefungen auf, welche von Schultern umgeben sind.

Die Abdeckfolie weist nacheinander vorteilhaft eine Siegelschicht, eine metallfolienfreie durchdrückbare Kunststofffolie enthaltend Polypropylen mit 5 bis 60 Gew.-% Füllstoffen, eine Schicht eines Kaschierklebers und eine nicht durchdrückbare Deckschicht aus Papier oder Polyethylenterephthalat auf.

Über die Siegelschicht wird die Abdeckfolie entlang den Schultern, welche die Vertiefungen im Bodenteil umgeben, aufgesiegelt. Die nicht durchdrückbare Deckschicht ist an einer Durchdrückpackung nach aussen gerichtet. Vor dem Anbringen der Abdeckfolie wird der Bodenteil mit dem Inhalt, wie Tabletten, Pillen, Dragees, Ampullen oder in anderen Fällen auch beliebigen Kleinteilen, befüllt und die Abdeckfolie aufgesiegelt. Die Kunststofffolie oder das Papier der Deckschicht ermöglichen eine problemlose Versiegelung besonders dann, wenn die Kunststofffolie oder das Papier wärmebeständiger sind als die metallfolienfreie durchdrückbare Kunststofffolie, da das erwärmte Siegelwerkzeug auf die Deckschicht drückt, dabei die Wärme erst durch die Schichten durchdringen muss und Temperaturspitzen abgebaut werden.

Die Inhaltsstoffe aus vorliegender manipulationssicheren Verpackung können nur entnommen werden, wenn nacheinander die Schritte des Abschälens oder Peelens der Deckschicht wenigstens über einer Vertiefung des Bodenteils erfolgt. Dannach erst kann durch Eindrücken der Vertiefung der Inhaltsstoff gegen die durchdrückbare Kunststoffschicht gedrückt werden, die unter dem Druck nachgibt und einreisst. Die Deckschicht kann mit Greiflaschen ausgerüstet sein. Im weiteren kann die Deckschicht mit Schwächungen versehen sein, die es erlauben beim Abschälen die durchdrückbare Kunststoffschicht nur über einer Vertiefung oder nur über eines Teiles der Vertiefungen freizulegen.

Schliesslich gelingt es mit vorliegender Verpackung, entsprechend der Wahl der Kunststoffe, eine sortenreine Verpackung herzustellen, die sich leicht recyklieren lässt. Dies gilt auch für den Fall, dass ein Papier oder ein unterschiedlicher Kunststoff als Deckfolie verwendet wird, da die Deckfolie in einem ersten Handgriff entfernt wird und die Entsorgung der aufgebrauchten Verpackung zu einem späteren Zeitpunkt erfolgt.

## Patentansprüche

1. Manipulationssichere Verpackung, insbesondere Durchdrückverpackung, aus einem Bodenteil enthaltend Vertiefungen zur Aufnahme der zu verpackenden Inhaltsstoffe und einer manipulationssicheren durchdrückbaren Abdeckfolie,
dadurch gekennzeichnet, dass
dass die Abdeckfolie nacheinander die Schichten aufweist:
a) eine metallfolienfreie durchdrückbare Kunststoffschicht in einer Dicke von 20 bis 300 µm,
b) ein abschälbarer Kaschierkleber
c) eine nicht durchdrückbare Deckschicht,
und zum Freilegen der Inhaltsstoffe erst die Deckschicht über den Kaschierkleber abgeschält und die Inhaltsstoffe durch die Kunststoffschicht durchgedrückt werden.

2. Manipulationssichere Verpackung nach Anspruch 1, dadurch gekennzeichnet, dass die metallfolienfreie durchdrückbare Kunststoffschicht aus einem thermoplastischen Kunststoff, enthaltend 5 bis 60 Gew.-%, bezogen auf den thermoplastischen Kunststoff, Füllstoffen, ist.

3. Manipulationssichere Verpackung nach Anspruch 1, dadurch gekennzeichnet, dass die metallfolienfreie durchdrückbare Kunststoffschicht eine Dicke von 30 µm bis 120 µm aufweist.

4. Manipulationssichere Verpackung nach Anspruch 1, dadurch gekennzeichnet, dass die metallfolienfreie durchdrückbare Kunststoffschicht eine Monofolie oder ein Folienverbund aus den thermoplastischen Kunststoffen der Reihe der Polyolefine, zweckmässig Polyethylene oder Polypropylene, der Polyester, zweckmässig der Polyalkylenterephthalate und insbesondere des Polyethylenterephthalates, des Polypropylenterephthalates oder des Polyalkylenisophtalates, des Polyvinylchlorids, der Polycarbonate, der Polyamide, des Polystyrols oder der Misch- oder Pfropfpolymerisate des Polystyrols und enthaltend einen Füllstoff, ist.

5. Manipulationssichere Verpackung nach Anspruch 1, dadurch gekennzeichnet, dass der Kaschierkleber als Schicht in Mengen von 3 bis 100 g/m² angewendet wird.

6. Manipulationssichere Verpackung nach Anspruch 1, dadurch gekennzeichnet, dass die nicht durchdrückbare Deckschicht eine Monofolie oder ein Folienverbund, enthaltend thermoplastische Kunststoffe, ein Papier oder ein Schichtstoff aus thermoplatischen Kunststoffen und Papier ist.

7. Manipulationssichere Verpackung nach Anspruch 1, dadurch gekennzeichnet, dass die nicht durchdrückbare Deckschicht eine Monofolie oder ein Folienverbund, enthaltend Polyester, zweckmässig Polyethylenterephthalate und PETP oder Polyamide.

8. Manipulationssichere Verpackung nach Anspruch 1, dadurch gekennzeichnet, dass die nicht durchdrückbare Deckschicht eine Monofolie oder ein Folienverbund enthält und wenigstens eine Folie auf wenigstens einer Seite eine Sperrschicht aus keramischen Materialien in einer Dicke von 5 bis 500 nm enthält oder wenigstens eine Folie aus thermoplastischen Kunststoffen mit Sperreigenschaften, zweckmässig EVOH, Polyvinylidenchlorid, Polyacrylnitril, Polyacryl-Polyamid-Copolymeren, Copolyestern oder aromatischen und amorphen Polyamiden ist.
